# EUROPEAN PATENT SPECIFICATION

(11) **EP 0 482 533 B1**
(45) Date of publication and mention of the grant of the patent: **14.06.1995**
(21) Application number: 91117854.9
(22) Date of filing: 18.10.1991
(51) Int. Cl.: C08J 3/03, C08L 1/28, C08K 5/09

(54) **Sodium formate fluidized polymer suspensions**
Mit Sodiumformiat fluidisierte Polymersuspensionen
Suspension de polymères fluidisées avec le formiate de sodium

(30) Priority: 22.10.1990 US 600745
(43) Date of publication of application: 29.04.1992
(73) Proprietor: AQUALON COMPANY, Wilmington Delaware 19850-5417 (US)
(72) Inventor: Burdick, Charles Lee, Landenberg, Pennsylvania 19350 (US); Pullig, Jackie N., Wilmington, Delaware 19810 (US)
(74) Representative: Lederer, Franz, Dr.

(56) References cited:
- EP-A- 0 259 939
- US-A- 2 947 645
- US-A- 4 883 536
- WORLD PATENTS INDEX LATEST Week 8520, Derwent Publications Ltd., London, GB; AN 118799 & JP-A-60058480

## Description

The invention relates to aqueous suspensions of nonionic polymers in a salt medium. In particular, the invention relates to the aqueous suspension of nonionic polymers in aqueous sodium formate.

U.S. Patent 4,883,536 "Suspension of Water Soluble Polymers in Aqueous Media Containing Dissolved Salts" and U.S. Patent 4,883,537 "Aqueous Suspension of Carboxymethylcellulose" both issued in the name of C. L. Burdick and assigned to the Aqualon Company teach that salts with divalent or trivalent anions are useful for suspension of cellulose ether derivatives. However, these and other references in the prior art gave no indication that a single monobasic acid salt would be similarly useful for fluidized polymer suspensions. Thus, it remained for the present invention to provide such an advance in the state of the art.

US-A-2947 645 describes a method for producing stable aqueous compositions of alkali-soluble cellulose ethers by dissolving in 0.5 to 4% aqueous alkaline solutions and subsequent neutralisation. US-A-4 883 536 describes suspensions of water-soluble polymers in aqueous media containing an ammonium salt having a multivalent anion, wherein the weight ratio of the multivalent ammonium salt to the water in the suspension is at least 0.15.

It is an object of the invention to provide fluidized polymer suspensions for paint, paper, mining, construction and oil and gas recovery uses for nonionic polymers in water and salt; characterized in that the salt is sodium formate whereby the suspension comprises 28% by weight sodium formate or higher. Sodium formate is a suspending salt for hydroxyethylcellulose, hydrophobically modified cellulose ether, hydrophobically modified hydroxyethylcellulose, hydrophobically modified ethylhydroxyethylcellulose, methylcellulose, methylhydroxypropylcellulose and derivatives thereof, or polyethylene oxide.

In a preferred process of the invention xanthan gum is dissolved in water prior to the addition of sodium formate, then at least one nonionic polymer selected from the group of hydroxyethylcellulose, methylcellulose or derived ethers is added to the aqueous xanthan/sodium formate solution to form a fluidized suspension of the polymers.

Especially preferred is a suspension obtainable by this process which contains xanthan gum as a stabilizing agent in an amount of 0.1 to 0.5% by weight based on the total weight of the fluidized polymer suspension.

In view of the success which had been achieved with aqueous polymer suspensions in carbonates, sulfates and phosphates; it was unexpected to discover that one and only one monobasic acid salt could provide such suspending benefit. Further it was found that a particular material, i.e., sodium formate, which was previously considered to be a low value byproduct, could actually provide such dramatic benefits in a before unknown application. Not only was sodium formate readily available, but the process of preparing fluidized polymer suspensions was less critical than previously experienced with multibasic acid salts.

While other salts such as potassium formate, calcium formate and acetates and/or bicarbonates might be expected to function in the same manner as sodium formate, such was not the case in actual comparison tests for preparing fluidized suspensions of 15 parts or more hydroxyethylcellulose in a total suspension composition of 100 parts.

| Salt | Salt Amount g | Water g | Natrosol 250GR | Result |
|---|---|---|---|---|
| Sodium Formate | 30 | 55 | 15 | Fluidized Suspension |
| Potassium Formate | 30 | 55 | 15 | Thick Gel |
| Sodium Acetate | 30 | 55 | 15 | Thick Gel |
| Calcium Formate | 30 | 55 | 15 | Thick Gel |
| Potassium Bicarbonate | 30 | 55 | 15 | Thick Gel |
| Sodium Bicarbonate | 30 | 55 | 15 | Thick Gel |

In addition to the discovery of the unique behavior of sodium formate in relation to other monovalent anion salts, it was surprising to also discover that not all nonionic polymers could be suspended. Suitable nonionic polymers for sodium formate suspension were hydroxyethylcellulose, hydrophobically modified hydroxyethylcellulose, hydrophobically modified cellulose ether, hydrophobically modified ethyl hydroxyethylcellulose, methylcellulose, methylhydroxypropylcellulose and polyethylene oxide (PEO). Preferably the suspension comprises 15% or more of the polymer. Neither anionic or cationic cellulose ethers were satisfactorily suspended and neither were nonionic guar gum or polyacrylamide.

It was observed that the ability of sodium formate solutions in water to be an effective suspending medium for water soluble polymer was dependent upon a certain concentration of the sodium formate in water being present. It was found for example that greater than 30% sodium formate concentration in water was required to prepare a fluidized suspension of hydroxyethylcellulose as shown in the following table:

| Sodium Formate g | Water g | Result |
|---|---|---|
| 20 | 65 | Thick Gel |
| 25 | 60 | Thick Gel |
| 30 | 55 | Fluidized Suspension |

The following is a model fluidized polymer suspension according to the invention in which the ingredients are listed in order of their addition to a mixing container.

| Ingredient | Parts By Weight Range | Ideal |
|---|---|---|
| Water | 45-55 | 49.85 |
| Xanthan Gum | 0.10-0.20 | 0.15 |
| Sodium Formate | 28-35 | 30 |
| Polymer | 10-25 | 20 |

While it is possible to suspend the polymer in just sodium formate, the suspension must be restirred periodically if no xanthan gum is incorporated as a suspension stabilizer. In this respect it was also surprising to find that xanthan gum was the most satisfactory agent for this purpose. Attempts to use other suspending agents such as carboxymethylcellulose (CMC), guar gum and sodium alginate were not as successful. However, in the case where the suspension is intended for use within a relatively short time after preparation, it would be possible to omit the xanthan gum and simply prepare a sodium formate solution and mix in the polymer to form a fluidized suspension which could be employed in either a continuous or batch process.

The invention has industrial applicability in paint, construction materials, paper, mining, oil and gas recovery. It is one aspect of the present invention to use a combination of sodium formate and xanthan gum as suspending agent for nonionic polymers as mentioned before. The following examples illustrate the practice of the invention without being limiting.

### Example 1

Into 5485 g of deionized water stirred vigorously a 15 g portion of xanthan gum available from Kelco Inc. was added. Stirring continued for 30 minutes until a hazy, slightly viscous solution was obtained. Then 3000g, sodium formate available from Aqualon Company was added and allowed to dissolve. Finally, 1500 g of Aqualon Natrosol® 250GR hydroxyethylcellulose was added over 10-20 minutes to form a fluidized suspension which had a Brookfield viscosity of 3000 mPa.s at 25°C. After one month the fluidized suspension was again measured as having the same viscosity without any signs of settling.

Portions of this sodium formate/xanthan/HEC fluidized suspension can be successfully employed for the paint, paper coatings and construction applications described with prior art fluidized polymer suspensions in US 4,883,536 and 4,883,537 as well as Applicant's U.S. patent No. 4,994,112.

### Example 2

Fluidized polymer suspensions were prepared as in Example 1 except that the xanthan gum was not added and the nonionic polymers tested included hydroxyethylcellulose, hydrophobically modified hydroxyethylcellulose, methylcellulose, methyl hydroxypropylcellulose all available from Aqualon, hydrophobically modified ethylhydroxyethylcellulose available from Berol Nobel as Bermocol® EHM 100, hydrophobically modified polymer available from Union Carbide Company as Cellosize® HEC SPATTER GUARD 100 and polyethylene oxide available as Polyox® 301 from Union Carbide.

In all cases it was possible to prepare fluidized polymer suspensions with Brookfield viscosities ranging from 1000 to 10,000 mPa.s at 25°C.

Noticeable settling was observed after stirring was stopped in about 24 to 72 hours.

### Example 3

The nonionic polymers of Example 2 were all prepared as fluidized polymer suspensions using from 0.10 to 0.20 parts by weight xanthan gum per 100 parts of total suspension as per the general procedure of Example 1. Suspensions stable for at least one month were obtained in all cases.

### (Comparative) Example 4

The procedure of Example 1 was repeated except that water and sodium formate levels were varied in an attempt to prepare fluidized polymer suspensions with nonionic guar gum, polyacrylamide, sodium carboxymethylcellulose and cationic hydroxyethylcellulose. Thick gels were obtained in all tests.

### (Comparative) Example 5

Example 1 was repeated except that a salt believed to have similar properties was substituted for sodium formate. Only thick gels were obtained in test varying amounts and type of salt, water and polymer for the following salts: calcium formate, potassium formate, sodium acetate, potassium bicarbonate and sodium bicarbonate.

### Example 6

Example 1 was repeated except that water and sodium formate ratios were varied as shown in Table 1.

**Table 1**

| Sodium Formate | Water | HEC | Result |
|---|---|---|---|
| 20 | 65 | 15 | Thick Gel |
| 25 | 60 | 15 | Thick Gel |
| 30 | 55 | 15 | Fluidized Suspension |

Table 1 illustrates the production of a fluidized suspension in a concentrated sodium formate solution (30%), whereas 20% and 25% solution produced only an unsatisfactory gel.

### EXAMPLE 7

Example 6 was repeated except that 28g sodium formate was added to 57g water and 15g HEC added. A fluidized suspension was obtained.

This example illustrates that a minimum of 28% by weight sodium formate salt is required to prepare fluidized polymer suspensions according to the invention.

In an especially preferred embodiment of the invention the use of a combination of sodium formate with xanthan gum as a suspending agent for nonionic polymers is taught. The suspending agents can preferably be used for nonionic cellulose ethers, whereby ethers such as hydroxyethylcellulose, hydrophobically modified hydroxyethylcellulose, methylcellulose, methylhydroxypropylcellulose and derivatives thereof, and hydrophobically modified ethylhydroxyethylcellulose are especially preferred.

## Claims

1. A fluidized suspension of a nonionic polymer in an aqueous salt solution, characterized in that the salt is sodium formate and the suspension comprises at least 28% by weight sodium formate and the polymer is one or more selected from the group consisting of hydroxyethylcellulose, hydrophobically modified cellulose ether, hydrophobically modified hydroxyethylcellulose, hydrophobically modified ethylhydroxyethylcellulose, methylcellulose, methylhydroxypropylcellulose or polyethylene oxide.

2. The suspension of claim 1 where xanthan gum is added as a suspending agent in an amount of from 0.1 to 0.5% by weight based on the weight of the total fluidized polymer suspension.

3. The suspension of claim 1 where the polymer comprises 15% by weight or higher.

4. A process for preparing an aqueous fluidized suspension of a nonionic polymer in xanthan gum and sodium formate comprises the steps:
(1) preparing a xanthan gum solution;
(2) adding 28% by weight or more sodium formate, and
(3) adding a nonionic polymer to prepare a fluidized polymer suspension which is stable for one month or longer.

5. The process of claim 4 where 30% by weight sodium formate is added in step (2).

6. The process of claim 5 where the polymer is hydroxyethylcellulose, hydrophobically modified cellulose ether, hydrophobically modified hydroxyethylcellulose, hydrophobically modified ethylhydroxyethylcellulose, methylcellulose or methylhydroxypropylcellulose.

7. The suspension obtainable by a process according to any one of claims 4 to 6 containing xanthan gum as a stabilizing agent in an amount of 0.1 to 0.5 % by weight based on the total weight of the fluidized polymer suspension.

8. The use of a combination of sodium formate and xanthan gum as suspending agent for nonionic polymers, selected from the group consisting of hydroxyethylcellulose, hydrophobically modified cellulose ether, hydrophobically modified hydroxyethylcellulose, hydrophobically modified ethylhydroxyethylcellulose, methylcellulose, methylhydroxypropylcellulose or polyethylene oxide.

## Patentansprüche

1. Fluidisierte Suspension eines nichtionischen Polymers in einer wäßrigen Salzlösung, dadurch gekennzeichnet, daß das Salz Natriumformiat ist und die Suspension mindestens 28 Gewichts-% Natriumformiat umfaßt und das Polymer eines oder mehrere, ausgewählt aus der Gruppe bestehend aus Hydroxyethylcellulose, hydrophob modifiziertem Celluloseether, hydrophob modifizierter Hydroxyethylcellulose, hydrophob modifizierter Ethylhydroxyethylcellulose, Methylcellulose, Methylhydroxypropylcellulose oder Polyethylenoxid ist.

2. Suspension nach Anspruch 1, worin Xanthangummi als Suspensionsmittel in einer Menge von 0,1 bis 0,5 Gewichts-% basierend auf dem Gesamtgewicht der fluidisierten Polymersuspension hinzugefügt wird.

3. Suspension nach Anspruch 1, worin das Polymer 15 Gewichts-% oder mehr umfaßt.

4. Verfahren zur Herstellung einer wäßrigen fluidisierten Suspension eines nichtionischen Polymers in Xanthangummi und Natriumformiat umfassend die Schritte:
(1) Herstellung einer Xanthangummilösung,
(2) Hinzufügen von 28 oder mehr Gewichts-% Natriumformiat, und
(3) Hinzufügen eines nichtionischen Polymers zur Herstellung einer fluidisierten Polymersuspension, die einen Monat oder länger stabil ist.

5. Verfahren nach Anspruch 4, worin in Schritt (2) 30 Gewichts-% Natriumformiat hinzugefügt werden.

6. Verfahren nach Anspruch 5, worin das Polymer Hydroxyethylcellulose, hydrophob modifizierter Celluloseether, hydrophob modifizierte Hydroxyethylcellulose, hydrophob modifizierte Ethylhydroxyethylcellulose, Methylcellulose oder Methylhydroxypropylcellulose ist.

7. Durch ein Verfahren nach einem der Ansprüche 4 bis 6 erhältliche Suspension enthaltend Xanthangummi als Stabilisierungsmittel in einem Gehalt von 0,1 bis 0,5 Gewichts-% basierend auf dem Gesamtgewicht der fluidisierten Polymersuspension.

8. Verwendung einer Kombination von Natriumformiat und Xanthangummi als Suspensionsmittel für nichtionische Polymere, ausgewählt aus der Gruppe bestehend aus Hydroxyethylcellulose, hydrophob modifiziertem Celluloseether, hydrophob modifizierter Hydroxyethylcellulose, hydrophob modifizierter Ethylhydroxyethylcellulose, Methylcellulose, Methylhydroxypropylcellulose oder Polyethylenoxid.

## Revendications

1. Suspension fluidifiée d'un polymère non ionique dans une solution aqueuse de sel, caractérisée en ce que le sel est le formiate de sodium et la suspension comprend au moins 28% en poids de formiate de sodium et le polymère en est un choisi dans le groupe formé par l'hydroxyéthylcellulose, un éther de cellulose modifié pour le rendre hydrophobe, l'hydroxyéthylcellulose modifiée pour la rendre hydrophobe, l'éthylhydroxyéthylcellulose modifiée pour la rendre hydrophobe, la méthylcellulose, la méthylhydroxypropylcellulose ou le poly(oxyde d'éthylène).

2. Suspension suivant la revendication 1, caractérisée en ce que l'on ajoute de la gomme xanthane à titre d'agent de mise en suspension en une proportion de 0,1 à 0,5% en poids sur base du poids de la suspension de polymère fluidifiée totale.

3. Suspension suivant la revendication 1, caractérisée en ce que le polymère comprend 15% en poids d'eau ou plus.

4. Procédé de préparation d'une suspension aqueuse fluidifiée d'un polymère non ionique dans de la gomme xanthane et du formiate de sodium, caractérisé en ce qu'il comprend les étapes consistant à :
(1) préparer une solution de gomme xanthane,
(2) ajouter 28% en poids et plus de formiate de sodium et
(3) ajouter un polymère non ionique pour préparer une suspension de polymère fluidifiée qui soit stable pendant un mois et plus.

5. Procédé suivant la revendication 4, caractérisé en ce que l'on ajoute 30% en poids de formiate de sodium au cours de l'étape (2).

6. Procédé suivant la revendication 5, caractérisé en ce que le polymère est l'hydroxyéthylcellulose, un éther de cellulose modifié pour le rendre hydrophobe, l'hydroxyéthylcellulose modifiée pour la rendre hydrophobe, l'éthylhydroxyéthylcellulose modifiée pour la rendre hydrophobe, la méthylcellulose ou la méthylhydroxypropylcellulose.

7. Suspension obtenue par mise en oeuvre du procédé suivant l'une quelconque des revendications 4 à 6, contenant de la gomme xanthane à titre d'agent de stabilisation en une proportion de 0,1 à 0,5% en poids sur base du poids total de la suspension de polymère fluidifiée.

8. Utilisation d'une combinaison de formiate de sodium et de gomme xanthane à titre d'agent de mise en suspension pour des polymères non ioniques choisis dans le groupe formé par l'hydroxyéthylcellulose, un éther de cellulose modifié pour le rendre hydrophobe, l'hydroxyéthylcellulose modifiée pour la rendre hydrophobe, l'éthylhydroxyéthylcellulose modifiée pour la rendre hydrophobe, la méthylcellulose, la méthylhydroxypropylcellulose ou le poly(oxyde d'éthylène).
